# EUROPÄISCHE PATENTSCHRIFT

(11) **EP 0 503 470 B1**
(45) Veröffentlichungstag und Bekanntmachung des Hinweises auf die Patenterteilung: **30.10.2002**
(21) Anmeldenummer: 92103738.8
(22) Anmeldetag: 05.03.1992
(51) Int. Cl.: B01J 37/34

(54) **Katalysator zur Entfernung von Wasserstoff aus einem wasserstoff-und sauer- stoffenhaltendem Gasgemisch und Verfahren zur Herstellung des Katalysators**
Catalyst for removing hydrogen from hydrogen and oxygen containing gases and process for preparing the catalyst
Catalyseur pour l'élimination de l'hydrogène d'un mélange gazeux contenant de l'hydrogène et de l'oxygène et procédé pour la préparation du catalyseur

(30) Priorität: 09.03.1991 DE 4107595; 28.06.1991 DE 4121418
(43) Veröffentlichungstag der Anmeldung: 16.09.1992
(73) Patentinhaber: Forschungszentrum Jülich GmbH, 52425 Jülich (DE); Gesellschaft für Reaktorsicherheit (GRS) mbH, 50667 Köln (DE)
(72) Erfinder: Chakraborty, Amiya Kumar, Dr., W-5042 Erftstadt (DE); Rohde, Jürgen, W-5060 Bergisch-Gladbach 2 (DE); Klatt, Karl-Heinz, W-5170 Jülich (DE); Wenzl, Helmut, Prof.Dr., W-5170 Jülich (DE); Konrad, Ralf, W-6349 Sinn (DE)
(74) Vertreter: Metz, Siegfried

(56) Entgegenhaltungen:
- EP-A- 0 358 912
- EP-A- 0 370 244
- DE-A- 2 025 430
- US-A- 3 125 539
- Ullmanns Encyklopädie der technischen Chemie, 4. Auflage, Band 16, Seiten 545-548

## Beschreibung

Die Erfindung bezieht sich auf einen Katalysator zur Entfernung von Wasserstoff aus einem bei Störfällen gebildeten Gasgemisch, das Wasserstoff und Sauerstoff enthält. Der Katalysator besteht aus einem die Oxidation des Wasserstoffs beeinflussenden Metall oder einer Metallegierung, das oder die als Katalysatorschicht auf einem Trägermaterial aufgetragen ist. Als katalytisch wirkende Metalle werden Palladium (Pd) oder Platin (Pt) oder Legierungen dieser Metalle eingesetzt. Erfindungsgegenstand ist auch ein Verfahren zur Herstellung des Katalysators.

Wasserstoff aus einem wasserstoff- und sauerstoffenthaltenden und deshalb explosiven Gasgemisch zu beseitigen, ist insbesondere bei Kernkraftwerksunfällen von Bedeutung. Solche Gasgemische können vor allem bei Kernschmelzunfällen von Leichtwasserreaktoren, sowie auch bei schwerwassermoderierten Reaktoren auftreten. Auch bei der Müllverbrennung steht die Beseitigung von Wasserstoff ein Problem dar, da Wasserstoff während der Verbrennung entstehen kann und dann Explosionsgefahr besteht.

Aus DE-PS 36 04 416 (PT 1.781) und DE-PS 37 25 290 (PT 1.859 G) ist es bekannt, zur Katalyse Pd oder Pd-Legierungen, insbesondere Pd-Ni-Cu-Legierungen sowie Pd-Ag und Pd-Cu einzusetzen. Die Katalysatoren sind als dünne Katalysatorschichten auf einem Trägermaterial zu ihrer mechanischen Stabilisierung aufgebracht. Die vorgenannten Metalle und Legierungen, sowie auch Pt in metallischer und legierter Form besitzen eine gute Katalysationsfähigkeit auch bei Anwesenheit von Dampf in der Wasserstoff und Sauerstoff enthaltenden Atmosphäre. Sie weisen geringe Ansprechzeiten zwischen dem Auftreten von Wasserstoff in der Atmosphäre und dem Beginn der katalytischen Oxidationsreaktion auf.

Auch aus EP-A-0358912 sind Katalysatoren bekannt, deren Trägermaterialien beschichtet sind. Die Träger bestehen aus wärmeleitendem Material, wie z.B. Al oder Al-Legierungen, Cu oder Cu-Legierungen, Ni oder Ni-Legierungen, und sind mit einer Oberflächenschicht aus einer Pd reichen PdNiCu-Legierung beschichtet, wobei zwischen Trägermaterial und Oberflächenschicht eine Zwischenschicht aus Vanadium, Niob, Tantal, Titan oder Zink vorgesehen ist.

Bisher werden die Katalysatorschichten auf den Trägermaterialien aufgedampft oder aufgesputtert, was aufwendige und kostspielige Apparaturen erforderlich macht. Auch bleibt die Haftfestigkeit solcher Katalysatorschichten unzureichend. Nach mehrmaligem Betrieb kann sich die Katalysatorschicht durch die Wärmeentwicklung während der Katalysation vom Trägermaterial lösen und abplatzen. Da die Katalysationsfähigkeit des abgeplatzten Materials bestehen bleibt, neigen solche Teile des Katalysatormaterials zum Glühen und führen zur Zündung von sich lokal bildenden zündfähigen Gasgemischen.

Der Flächenbedarf, der zur katalytischen Umsetzung von Wasserstoff erforderlich ist, ist abhängig von der Katalysationsfähigkeit der Katalysatorschicht pro cm² Grundfläche der Schicht bzw. pro cm² Trägermaterialfläche. Der Flächenbedarf steigt, je geringer die Katalysationsfähigkeit der Katalysatorschicht ist.

Aufgabe der Erfindung ist es, eine Katalysatorschicht mit hoher Haftfestigkeit auf dem Trägermaterial und guter Katalysationsfähigkeit zu schaffen.

Diese Aufgabe wird gemäß der Erfindung durch die in Patentanspruch 1 angegebene.

Katalysatorausbildung gelöst. Danach wird für den Katalysator als Trägermaterial austenitischer Stahl verwendet. Das Trägermaterial ist zwischen 0,1 bis 5 mm, bevorzugt zwischen 1 bis 3 mm stark. Die Katalysatorschicht, mit der das Trägermaterial beschichtet ist, weist eine Stärke von 0,01 bis 1 mm, bevorzugt 0,1 mm auf. Die Katalysatorschicht ist porös, sie wird mittels Plasma- oder Flammspritzen aufgebracht, wobei ein aus Pd oder Pt oder Legierungen dieser Metalle bestehendes Metallpulver mit Korngrößen im Bereich zwischen 0,1 bis 1000 µm, bevorzugt zwischen 20 bis 60 µm verwendet wird. Durch das Aufbringen der Katalysatorschicht mittels Plasma- oder Flammspritzen wird die Porosität der Katalysatorschicht erzeugt, wobei das Flammspritzen mit oder ohne Einschmelzen des gespritzten Katalysatormaterials auf der Trägermaterialoberfläche erfolgen kann. Die Porosität der Katalysatorschicht und deren Rauigkeit vergrößern die für die Katalyse zur Verfügung stehende Gesamtoberfläche des Katalysatormaterials und steigern somit die Katalysationsfähigkeit der Katalysatorschicht pro cm² Trägermaterial. Wesentlich für die Größe der für die Katalyse zur Verfügung stehenden Oberfläche ist die durch das Plasmaspritzen erzeugte offene Porosität der Katalysatorschicht. Aufgrund der pro Flächeneinheit Trägermaterial vergrößerten Katalysatoroberfläche erhöht sich bei erhöhtem Wasserstoffumsatz auch die Temperatur der Katalysatorschicht im Vergleich mit einer aufgedampften oder aufgesputterten Katalysatorschicht. Es wird somit wegen des exponentiellen Anstieges des Wasserstoffumsatzes mit steigender Temperatur auch ein rascherer Abbau des Wasserstoffanteils im Gasgemisch erreicht. Dies verringert die Wahrscheinlichkeit, daß sich bei auftretendem Wasserstoff lokal explosible Gasgemische bilden.

Die Porosität der Katalysatorschicht wird neben der erfoderlichen Verarbeitungstemperatur für das Pulver und dem Jonisationsgrad durch Wahl der Korngröße des durch Plasmaspritzen aufgebrachten Metallpulvers beeinflußt. Zur Erzeugung der Katalysatorschicht wird Metallpulver aus katalytischem Material mit Korngrößen im Bereich zwischem 0,1 bis 1000 µm, bevorzugt zwischen 20 bis 60 µm verwendet.

Die Dicke der Katalysatorschicht beträgt zwischen 0,01 bis 1 mm, bevorzugt 0,1 mm. Die auf dem Trägermaterial aufgebrachte Katalysatorschicht ist somit etwa 1/10 so stark wie das Trägermaterial selbst, dessen Stärke - wie bereits erwähnt - zwischen 0,1 bis 5 mm, bevorzugt zwischen 1 bis 3 mm beträgt.

Die Erzeugung der Katalysatorschicht durch Plasma-oder Flammspritzbeschichtung des Trägermaterials ist in vorteilhafterweise auch zur Ausbildung lokalbegrenzter Materialzonen aus einem sich vom Katalysatormaterial unterscheidenden Werkstoff nutzbar. Bevorzugt ist gegebenenfalls neben der Katalysatorschicht nach Patentanspruch 2 bevorzugt am Flächenrand des Trägermaterials lokal begrenzt Ni aufgebracht. Das Aufbringen am Flächenrand hilft Störungsstellen innerhalb der Katalysatorschicht zu vermeiden, die deren Haftfestigkeit auf dem Trägermaterial beeinträchtigen könnten.

Zur Herstellung des Katalysators wird ein Verfahren unter Schutz gestellt, das in Patentanspruch 3 angegeben ist. Danach wird der Katalysator nach Aufbringen der Katalysatorschicht mittels Plasma- oder Flammspritzen zur Verbesserung der Haftfestigkeit zwischen Katalysatorschicht und Trägermaterial in einer Atmosphäre aus Wasserstoff und Inertgas wärmebehandelt. Es kommt darauf an, die sich im Übergangsbereich zwischen Katalysatorschicht und Trägermaterial beim Plasma- oder Flammspritzen gebildete Zwischenschicht durch verstärkte Diffusion zwischen metallischem Katalysator- und Trägermaterial zu homogenisieren.

Als geeignete Metallegierung zum Plasma- oder Flammspritzen hat sich Pd, Pt oder PdNi erwiesen, Patentanspruch 4. Ni weist zum Auftragen zusammen mit Pd im Plasma- oder Flammspritzverfahren bevorzugte Eigenschaften auf. Es senkt darüber hinaus die Materialkosten für die Schicht und bindet ggf. im Gasgemisch als Katalysatorgift enthaltenes CO unter Bildung von Carbonyl.

Die Haftung zwischen Katalysatorschicht und Trägermaterial wird auch dadurch verbessert, daß das Trägermaterial vor dem Plasmaspritzen vorgewärmt wird und somit Temperaturdifferenzen zwischen Plasmastrahl und Trägermaterial beim Auftreffen des Katalysatormaterials vermindert werden.

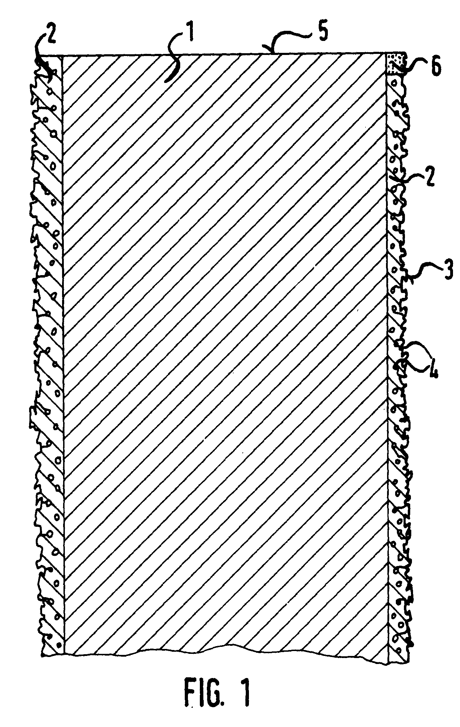

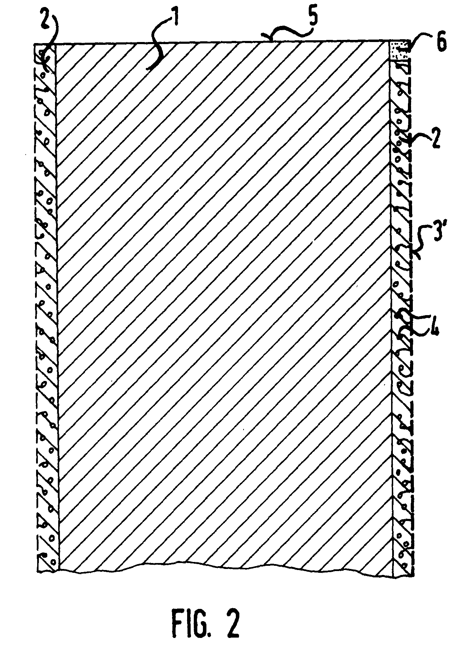

Der erfindungsgemäße Katalysator und das erfindungsgemäße Verfahren werden im folgenden anhand von Ausführungsbeispielen näher erläutert. In der Zeichnung ist ein Katalysator mit beschichtetem Trägermaterial im Querschnitt schematisch wiedergegeben.

Die Zeichnung zeigt einen Katalysator mit Trägermaterial 1, auf dem beidseitig eine Katalysatorschicht 2 aufgetragen ist. Die Katalysatorschichten 2 wurden im Plasmaspritzverfahren aufgebracht. Die Katalysatorschichten sind porös und weisen somit große Gesamtoberflächen 3 auf. Die gebildeten Poren 4 sind im wesentlichen offen und bilden von außen zugängliche Hohlräume, insbesondere tunnelförmige Röhren.

Im Ausführungsbeispiel ist am Flächenrand 5 des Trägermaterials in einer lokalbegrenzten Zone 6 Nickel aufgebracht.

Die Katalysatorschicht ist im Ausführungsbeispiel auf einem 2,5 mm dicken Trägermaterial aus austenitischem Stahl aufgespritzt. Das Trägermaterial wurde vor der Plasmabespritzung sandgestrahlt und gereinigt. Im Plasmaspritzverfahren aufgebracht wurde Pd-Pulver mit Korngrößen im Bereich zwischen 0,1 und 1000 µm. Das Pulver wurde unter Verwendung von Argon als Inertgas mit einem Plasmabrenner auf das Trägerblech gespritzt. Die Katalysatorschicht haftet vorwiegend durch mechanische Verklammerung und durch Diffusion. Die Schichtdicke der Katalysatorschicht beträgt im Ausführungsbeispiel zwischen 60 und 100 um, sie wird im allgemeinen so bestimmt, daß das Katalysatormaterial die Oberfläche des Trägermaterials geschlossen bedeckt.

Die Katalysatorschicht wurde auf einer Trägermaterialplatte mit einer Grundfläche von 20 x 40 mm aufgebracht und in Testversuchen zur Katalyse von Wasserstoff in einer neben Wasserstoff und Sauerstoff auch Kohlenmonoxid als Katalysatorgift enthaltenden Gasatmosphäre getestet. Die Katalysatoreigenschaften blieben auch nach Durchführung einer hohen Anzahl von Katalysatorversuchen (mehr als 60 Versuche) ohne Verschlechterung erhalten. Je nach Konzentration des Wasserstoffs im Gasgemisch stellte sich eine entsprechende Reaktionstemperatur im Katalysatormaterial ein. Es wurden Temperaturen bis zu 500 °C erreicht.

Metallographische Untersuchungen des beschichteten Trägermaterials zeigten, daß auch nach einer hohen Anzahl von Betriebsstunden und entsprechender Wärmeerzeugung die Haftung der Katalysatorschicht nicht beeinträchtigt war und keine Abplatzungen zu beobachten waren.

In einem weiteren Ausführungsbeispiel wurde auf einem 2,5 mm dicken Trägerblech aus austentischem Stahl eine Katalysatorschicht aus Pd aufgetragen. Der Komgrößenbereich des Pd-Pulvers lag zwischen 20 bis 60 µm. Nach der Plasmabeschichtung wurde das beschichtete Trägermaterial zur Wärmebehandlung angelassen. Bei metallographischen Untersuchungen konnte an der Nahtstelle zwischen Trägermaterial und Katalysatorschicht eine ausreichende Übergangsschicht zwischen Katalysator und Trägermaterial festgestellt werden, die ein Abplatzen der Katalysatorschicht verhindert.

In einem weiteren Ausführungsbeispiel konnte durch Mischen einer groben Pulverfraktion mit einer Pulverfraktion geringerer Korngröße eine Verdichtung des Katalysatormaterials im Übergangsbereich zwischen Katalysatorschicht und Trägermaterial erreicht werden. Als PdNi-Legierung wurde eine Pulvermischung mit einem 1 : 1 Volverhältnis zwischen Pd und Ni verspritzt.

Auch bei verhältnismäßig dicken Katalysatorschichten auf dem Trägermaterial konnte nach 30 Katalysationsversuchen kein Abplatzen festgestellt werden. Die Katalysatorschicht und ihre Katalysationsfähigkeit auf dem Trägermaterial blieb unverändert erhalten.

In analoger Weise wurde auf dem Trägermaterial 1 beidseitig eine Katalysatorschicht 2 im Flammspritzverfahren aufgebracht. Auch diese Katalysatorschichten sind porös und weisen große Gesamtoberflächen 3 auf. Die gebildeten Poren 4 sind ebenfalls im wesentlichen offen und bilden von außen zugängliche Hohlräume, insbesondere tunnelförmige Röhren. Beim Flammspritzverfahren mit Einschmelzen des gespritzten Materials auf der Trägermaterialoberfläche bilden sich gegenüber dem Flammspritzen ohne Einschmelzung glattere Oberflächen aus.

Die Katalysatorschicht ist im Ausführungsbeispiel auf einem 2,5 mm dicken Trägermaterial aus austenitischem Stahl aufgespritzt. Das Trägermaterial wurde vor der Flammbespritzung sandgestrahlt und gereinigt. Die Schichtdicke der Katalysatorschicht beträgt wie in den vorangegangenen Ausführungsbeispielen zwischen 60 und 100 µm, das Katalysatormaterial bedeckt geschlossen die Oberfläche des Trägermaterials.

## Patentansprüche

1. Metallischer Katalysator zur Entfernung von Wasserstoff durch Abbau des Wasserstoffanteils aus einem bei Störfällen gebildeten Gasgemisch, das Wasserstoff und Sauerstoff enthält, bestehend aus einem die Oxidation des Wasserstoffs beeinflussenden Metall oder einer Metallegierung, das oder die als poröse Katalysatorschicht (2) in einer Stärke von 0,01 bis 1 mm, bevorzugt 0,1 mm, zumindest in Teilbereichen auf einem Trägermaterial aus austenitischem Stahl, das zwischen 0,1 bis 5 mm, bevorzugt zwischen 1 bis 3 mm stark ist, mittels Plasma- oder Flammspritzen aufgebracht ist, wobei ein aus Pd oder Pt oder Legierungen dieser Metalle bestehendes Metallpulver mit Komgrößen im Bereich zwischen 0,1 bis 1000 µm, bevorzugt zwischen 20 bis 60 µm verwendet wird, und wobei gegebenenfalls benachbart zur Katalysatorschicht eine lokalbegrenzte Nickelzone vorgesehen ist.

2. Katalysator nach Anspruch 1,
**dadurch gekennzeichnet,**
**daß** die Nickelzone am Flächenrand des Trägermaterials angeordnet ist.

3. Verfahren zur Herstellung eines metallischen Katalysators zur Entfernung von Wasserstoff durch Abbau des Wasserstoffanteils aus einem bei Störfällen gebildeten Gasgemisch, das Wasserstoff und Sauerstoff enthält, bestehend aus einer die Oxidation des Wasserstoffs katalytisch beeinflussenden metallischen Katalysatorschicht, die auf einem Trägermaterial aus austenitischem Stahl aufgebracht wird, das zwischen 0,1 bis 5 mm, bevorzugt zwischen 1 bis 3 mm stark ist, wobei mittels Plasma- oder Flammspritzen eines aus Pd oder Pt oder Legierungen dieser Metalle bestehenden Metallpulvers mit Korngrößen im Bereich zwischen 0,1 bis 1000 µm, bevorzugt zwischen 20 bis 60 µm eine poröse Katalysatorschicht (2) in einer Stärke von 0,01 bis 1 mm, bevorzugt 0,1 mm, zumindest in Teilbereichen auf das Trägermaterial aufgebracht wird, und das beschichtete Trägermaterial in einer Atmosphäre aus Wasserstoff und Inertgas wärmebehandelt wird, und wobei gegebenenfalls benachbart zur Katalysatorschicht am Flächenrand des Trägermaterials Nickel aufgebracht wird.

4. Verfahren nach Anspruch 3,
**dadurch gekennzeichnet,**
**daß** auf das Trägermaterial eine PdNi - Legierung aufgespritzt wird.

5. Verfahren nach einem der vorhergehenden Ansprüche 3 und 4,
**dadurch gekennzeichnet,**
**daß** das Trägermaterial vor dem Plasma- oder Flammspritzen vorgewärmt wird.

## Claims

1. A metallic catalyst for removing hydrogen by decomposition of the hydrogen portion from a gas mixture containing hydrogen and oxygen that is formed under anomalous circumstances, consisting of a metal or a metal alloy that influences the oxidation of the hydrogen and that is applied in the form of a porous catalyst layer (2) having thickness from 0.01 to 1 mm, preferably 0.1 mm, by means of plasma or flame sprays to at least delimited areas of a carrier made from austenitic steel having thickness from 0.1 to 5 mm, preferably from 1 to 3 mm, wherein a powdered metal consisting of Pd or Pt or alloys of these metals having grain sizes between 0.1 and 1000 µm, preferably between 20 and 60 µm, is used, and wherein a locally delimited nickel zone may be provided adjacent to the catalyst layer.

2. The catalyst according to claim 1, **characterised in that** the nickel zone is disposed at the superficial margins of the carrier.

3. A process for manufacturing a metallic catalyst for removing hydrogen by decomposition of the hydrogen portion from a gas mixture containing hydrogen and oxygen that is formed under anomalous circumstances, consisting of a metallic catalyst layer that has catalytic effect for the oxidation of the hydrogen and that is applied to a carrier made from austenitic steel having thickness between 0.1 and 5 mm, preferably between 1 and 3 mm, wherein a powdered metal consisting of Pd or Pt or alloys of these metals having grain sizes in the range from 0.1 to 1000 µm, preferably from 20 to 60 µm is applied by plasma or flame spraying to at least delimited areas on the carrier material as a porous catalyst layer (2) having thickness from 0.01 to 1 mm, preferably 0.1 mm, and the carrier thus coated is heat treated in a hydrogen and inert gas atmosphere, and wherein a nickel zone may be provided on the superficial margins of the carrier adjacent to the catalyst layer.

4. The process according to claim 3, **characterised in that** a PdNi alloy is sprayed onto the carrier.

5. The process according to either of claims 3 and 4, **characterised in that** the carrier is preheated prior to plasma or flame spraying.

## Revendications

1. Catalyseur métallique pour l'élimination d'hydrogène par suppression de la teneur en hydrogène d'un mélange gazeux formé en cas d'anomalies qui contient de l'hydrogène et de l'oxygène, consistant en un métal influençant l'oxydation de l'hydrogène ou en un alliage métallique qui est ou sont appliqués comme couche catalytique poreuse (2) dans une épaisseur de 0,01 à 1 mm, de préférence 0,1 mm, au moins sur des zones partielles sur une matière support en acier austénistique, qui est d'une épaisseur située entre 0,1 et 5 mm, de préférence entre 1 et 3 mm, par projection au plasma ou flammage, une poudre métallique à base de Pd ou Pt ou d'alliages de ces métaux avec une granulométrie dans une fourchette de 0,1 à 1000 µm, de préférence de 20 à 60 µm, étant utilisée et une zone de nickel localement délimitée étant, le cas échéant, prévue à proximité de la couche catalytique.

2. Catalyseur selon la revendication 1,
**caractérisé en ce que**
la zone de nickel est positionnée en bordure de la surface de la matière support.

3. Procédé pour la fabrication d'un catalyseur métallique pour l'élimination de l'hydrogène par suppression de la teneur en hydrogène d'un mélange gazeux formé en cas d'anomalies, qui contient de l'hydrogène et de l'oxygène, consistant en une couche catalytique métallique influençant l'oxydation de l'hydrogène par catalyse, qui est appliquée sur une matière support en acier austénistique, d'une épaisseur située entre 0,1 et 5 mm, de préférence entre 1 et 3 mm, une poudre métallique à base de Pd ou Pt ou d'alliages de ces métaux d'une granulométrie de l'ordre de 0,1 à 1000 µm, de préférence de 20 à 60 µm, étant appliquée au moins sur des zones partielles sur la matière support pour former une couche catalytique poreuse (2) d'une épaisseur de 0,01 à 1 mm, de préférence 0,1 mm, et la matière support plaquée étant traitée à chaud dans une atmosphère à base d'hydrogène et de gaz inerte, et du nickel étant, le cas échéant, appliqué à proximité de la couche catalytique en bordure de la surface de la matière support.

4. Procédé selon la revendication 3,
**caractérisé en ce que**
un alliage de PdNi est projeté sur la matière support.

5. Procédé selon une des revendications 3 et 4,
**caractérisé en ce que**
la matière support est préchauffée avant la projection au plasma ou le flammage.
